# EUROPEAN PATENT APPLICATION

(11) **EP 4 231 520 A1**
(43) Date of publication of application: **23.08.2023**
(21) Application number: 22778277.8
(22) Date of filing: 04.01.2022
(51) Int. Cl.: H02P 6/16

(54) **CIRCUIT STRUCTURE FOR COMPENSATING FOR HALL DEVIATION OF BRUSHLESS DIRECT CURRENT MOTOR, AND ANGLE CONTROLLER OPERATION METHOD**

(30) Priority: 29.03.2021 CN 202110335137
(71) Applicant: CRM ICBG (WUXI) CO., LTD., Wuxi, Jiangsu 214135 (CN)
(72) Inventor: LI, Yafei, Wuxi, Jiangsu 214135 (CN); ZHAO, Xudong, Wuxi, Jiangsu 214135 (CN); WANG, Sang, Wuxi, Jiangsu 214135 (CN); LIU, Xinjie, Wuxi, Jiangsu 214135 (CN); HUA, Jing, Wuxi, Jiangsu 214135 (CN); HUA, Chun, Wuxi, Jiangsu 214135 (CN)
(74) Representative: Canzler & Bergmeier Patentanwälte Partnerschaft mbB
(86) International application number: PCT/CN2022/070114
(87) International publication number: WO 2022/206088

(57) **Abstract**

The present invention relates to a circuit structure for compensating for a Hall deviation of a brushless direct current motor. The circuit structure comprises: a CPU, into which a register value is written; an angle controller, which controls the forward and reverse rotations of an electric motor and compensates for a Hall deviation; a driving waveform generator, which generates driving waveforms according to a first angle signal DegOut provided by the angle controller and an amplitude signal rp_Ampln provided by the CPU; a PWM wave generator, which generates a PWM signal for driving the electric motor to rotate; the electric motor, which receives the PWM signal generated by the PWM wave generator and starts to rotate; and a Hall signal detector, which receives a Hall sensor signal generated after the rotation of the electric motor, processes the signal, and transmits the signal to the angle controller, so as to calibrate a rotor angle. The present invention further relates to a method for implementing the operation of an angle controller. The circuit structure for compensating for a Hall deviation of a brushless direct current motor, and the angle controller operation method of the present invention are used, which can be quickly handled and are convenient and simple to operate, there are no strict requirements for technicians, and the development time can be reduced. By means of the present invention, no complicated software program is required, and a CPU occupies less resources.

## Description

### CROSS REFERENCE TO RELATED APPLICATIONS

The present application claims the benefit of priority to Chinese Patent Application No. CN 202110335137.2, entitled "CIRCUIT STRUCTURE FOR COMPENSATION OF HALL DEVIATION OF BRUSHLESS DC MOTOR AND METHOD FOR OPERATION OF ANGLE CONTROLLER", filed with CNIPA on March 29, 2021, the disclosure of which is incorporated herein by reference in its entirety.

### FIELD OF DISCLOSURE

The present disclosure relates to the field of motor compensation, particularly to the field of HALL deviation, specifically to a circuit structure for compensation of HALL deviation of a brushless DC motor and a method for operation of an angle controller.

### DESCRIPTION OF RELATED ARTS

Generally, HALL sensors are installed in the motor to obtain position information of motor rotors. However, HALL sensors may be installed with some mechanical deviations, which can lead to deviations in angle estimation of rotor position, fluctuations of rotor average speed, and increased motor noise.

Currently, software programs are most commonly used to compensate for HALL deviation, and therefore, software developers have to write complex software programs, which requires a high level understanding of motor related theories and mathematics, and longtime CPU utilization.

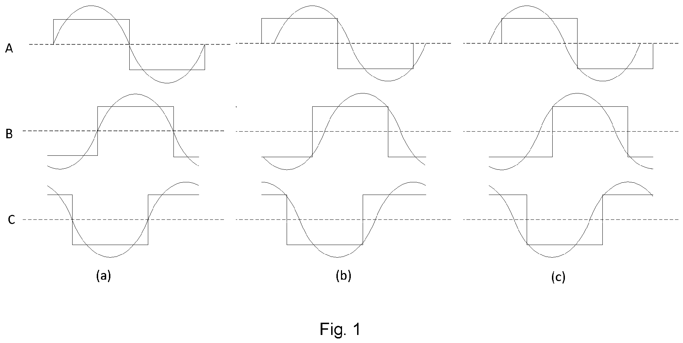

Alternating manners of suppying power to the coils in a motor in a specific way allows the motor to rotate, which is also called commutation. For brushless DC motors, accurate commutation can only be realized according to the actual position of the rotor, and HALL sensor mode is a common method to obtain position information of a motor rotor. Generally speaking, three HALL elements are uniformly installed in the motor at an electrical angle of 120°. Theoretically, such a HALL-element layout enables the HALL signal edges to overlap the motor's line back electromotive force zero-crossing points. As shown in FIG. 1(a), the line back electromotive force zero-crossing points are ideal position points for the drive control of a brushless DC motor, and the corresponding HALL moments directly serve as the ideal commutation points of the motor. However, the HALL deviation resulted from the installation causes the HALL signal edges to be ahead of or lag behind the motor's line back electromotive force zero-crossing points. As shown in FIG. 1(b) and FIG. 1(c), advance commutation or lagged commutation cause asymmetrical waveforms on two sides of the motor terminal voltage, which results in unstable operation of motor. Therefore, HALL deviation needs to be compensated for, in order to perform commutation.

At present, software programs are most commonly used to compensate for the mechanical deviation of HALL sensor installation, where software compensation needs to be realized on the basis of high-resolution rotor position estimation, speed estimation, and vector control. Particularly, these software programs include zero-order taylor algorithm, fourier decoupling transformation, and other algorithms and need a lot of motor theory and mathematical theory for support, and therefore, a huge amount of calculations are required and implementation is difficult and complicated. In addition, complex software programs consume a lot of CPU resources, which is not conducive to other CPU control.

### SUMMARY OF THE PRESENT INVENTION

The present disclosure provides a circuit structure for compensation of HALL deviation of a brushless DC motor and a method for operation of an angle controller, in which the circuit has a simple structure, good effectiveness, and wide application.

The circuit structure for compensation of HALL deviation of a brushless DC motor and the method for operation of an angle controller are as follows.

The circuit structure for compensation of HALL deviation of a brushless DC motor includes:
a CPU, used to write in register values and output angle increment signal rp_DegCntlnc, angle controller enable signal rp_DegCntEn, and rotor anglesrp_UDeg1-6 (i.e., rp_UDeg1, rp_UDeg2, rp_UDeg3, rp_UDeg4, rp_UDeg5, and rp_UDeg6);
an angle controller, connected with the CPU, a HALL signal detector, and a PWM waveform generator, where the angle controller controls forward and reverse rotations of a motor and compensates for a HALL deviation;
a drive waveform generator, connected with the CPU and the angle controller, where the drive waveform generator generates a drive waveform according to a first angle signal DegOut provided by the angle controller and an amplitude signal rp_Ampln provided by the CPU ;
the PWM waveform generator, connected with the angle controller and the drive waveform generator, where the PWM waveform generator generates a PWM signal for driving a rotation of the motor according to a drive waveform signal provided by the drive waveform generator;
the motor, connected with the PWM waveform generator, where the motor receives the PWM signal provided by the PWM waveform generator and starts to rotate; and
the HALL signal detector, connected to the motor and the angle controller, where the HALL signal detector receives HALL sensor signals generated by rotations of the motor, and the HALL signals PHU, PHV, and PHW after a synchronous filtering process are transmitted to the angle controller for selecting the rotor angle to be calibrated.

In an embodiment, the angle controller enable signal rp_DegCntEn from the CPU is written in the angle controller; a highest digit of the angle increment signal rp_DegCntlnc controls forward rotation and reverse rotation of the motor; and when the HALL signals change, a corresponding compensation angle DegCnt_hUVWChg is updated to the first angle signal DegOut.

In an embodiment, when the highest digit of the angle increment signal rp_DegCntlnc is 0, the angle counter performs an addition operation, the value of the first angle signal DegOut increases from 0° by an angle increment whose value is the same as that of the register signal rp_DegCntlnc, and the motor rotates in a forward direction; when the highest digit of the angle increment signal rp_DegCntlnc is 1, the angle counter performs a subtraction operation, the value of the first angle signal DegOut decreases from 360° by an angle decrement whose value is the same as an absolute value of the register signal rp_DegCntlnc, and the motor rotates in a reverse direction.

In an embodiment, the HALL signals PHU, PHV, and PHW change every 60°.

In an embodiment, when the motor rotates in a forward direction, if the value of the first angle signal DegOut is greater than or equal to 360°, clearing the first angle signal DegOut and re-increasing the first angle signal DegOut from 0°; when the motor rotates in a reverse direction, if the value of the first angle signal DegOut is less than or equal to 0°, setting the value of the first angle signal DegOut as 9'd360 and re-decreasing the first angle signal DegOut from 360°.

In an embodiment, a write-in value of the register signal rp_DegCntlnc is in a form of complement code.

The method for operation of an angle controller based on the above-mentioned circuit structure, includes the following:
step (1) configuring a register signal rp_DegCntlnc according to a motor speed, setting an angle increment; configuring register signals rp_UDeg1~rp_UDeg6 according to actual installation positions of HALL sensors, setting a compensation angle; configuring register signal rp_DegCntEn=1, where a motor starts to rotate;
step (2) determining whether a second angle signal w_DegOut is greater than or equal to 360° or not, if yes, which means that the motor has rotated a cycle, clearing the second angle signal w_DegOut, re-rotating the motor and re-starting the second angle signal w_DegOut from 0°, if no, continuing with step (3);
step (3) determining whether three-phase HALL signals PHU, PHV, and PHW have changed, if yes, updating a compensation angle DegCnt_hUVWChg corresponding to the HALL signals to the second angle signal w_DegOut; if no, continuing with step (4);
step (4) determining whether an angle self-increasing trigger signal TRIG is valid, if yes, increasing the second angle signal w_DegOut by rp_DegCntlnc, if no, continuing with step (5);
step (5) keeping the second angle signal w_DegOut unchanged, and continuing with step (2).

The circuit structure for compensation of HALL deviation of a brushless DC motor and method for operation of an angle controller in the present disclosure are easy and simple for operation, and therefore, no complex software programs are needed, and the time for developing software programs and CPU resources are saved. In addition, the codes for compensating the advance commutation and the lagged commutation in the present disclosure are the same, thus saving chip area.

### BRIEF DESCRIPTION OF THE DRAWINGS

FIG. 1 shows a schematic diagram of relative position relationship between hop edges of HALL signals and line back electromotive forces of motor in the prior art.
FIG. 2 shows a schematic diagram indicating a correspondence relationship between HALL signals and rotor angles of a circuit structure for compensation of HALL deviation of a brushless DC motor according to an embodiment.
FIG. 3 shows a hardware control circuit diagram of a circuit structure for compensation of HALL deviation of a brushless DC motor in the present disclosure.
FIG. 4 shows a structural diagram of an angel controller of a circuit structure for compensation of HALL deviation of a brushless DC motor in the present disclosure.

### DETAILED DESCRIPTION OF THE PREFERRED EMBODIMENTS

In order to describe the technical content of the present disclosure more clearly, further description is provided below with reference to specific embodiments.

The present disclosure provides a hardware circuit that can effectively compensate for the installation deviation of HALL sensors in the motor without the need for a complex software program, save development costs, and reduce CPU usage time.

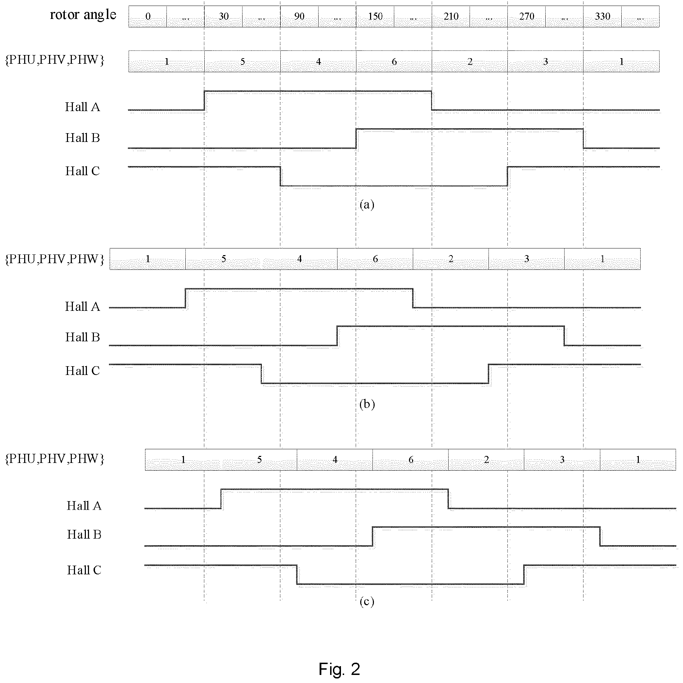

The HALL sensors are evenly arranged on the integrated circuit board at the end of the motor at an electrical angle of 120°, and the number of stages of magnetic pole of the HALL sensors is typically the same as that of the motor rotor. Theoretically, such a HALL sensor layout enables the HALL signal edges to overlap the motor's line back electromotive force zero-crossing points, and HALL signal edges can achieve accurate commutation. The HALL sensor generates a logic level (0 or 1) according to the polarity of the magnetic pole in the corresponding area. When the motor rotates clockwise, the order of the three-phase HALL signals {U, V, W} is 5, 4, 6, 2, 3, 1; and when the motor rotates counter-clockwise, the order of the three-phase HALL signals {U, V, W} is 1, 3, 2, 6, 4, 5. The correspondence relationship between the three-phase HALL signals {U, V, W} and the rotor angle during clockwise rotation is shown in FIG. 2(a), where 5->30°, 4->90°, 6->150°, 2->210°, 3->270°, 1->330°. Due to the HALL deviation, the HALL signals are ahead of or lag behind the line back electromotive force zero-crossing points, and FIG. 2(b) shows the circumstance where three-phase HALL signals are ahead of the line back electromotive force zero-crossing points, such as 5->28°, 4->87°, 6->149°, 2->208°, 3->268°, 1->327°. FIG. 2(c) shows the circumstance where three-phase HALL signals lag behind the line back electromotive force zero-crossing points, such as 5->33°, 4->94°, 6->153°, 2->215°, 3->272°, 1->331°. Advance commutation and lagged commutation lead to electromagnetic torque fluctuation of the motor and unstable operation of the motor.

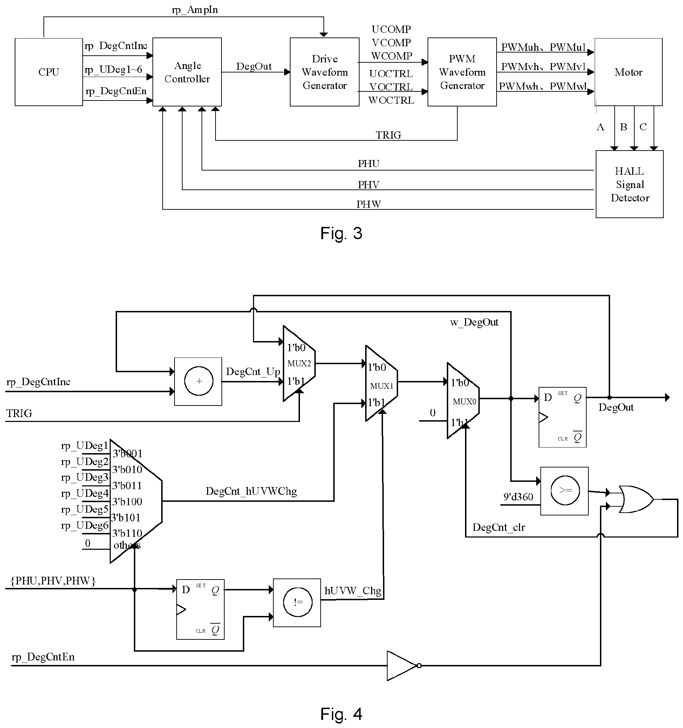

The present disclosure provides a hardware circuit that simply and effectively compensates for the installation deviation of the HALL sensors in the motor. The hardware circuit structure of the present disclosure includes a CPU, an angle controller, a drive waveform generator, a PWM waveform generator, a motor, and a HALL signal detector, and the structure diagram is shown in FIG. 3. The CPU is used to write in register values. The register signal rp_DegCntEn is an angle controller enable signal, and the angle controller only works when the rp_DegCntEn is valid. The register signal rp_DegCntlnc is used to set the angle increment, which controls the forward and reverse rotation of the motor. Register signals rp_UDeg1, rp_UDeg2,rp_UDeg3, rp_UDeg4, rp_UDeg5, andrp_UDeg6 are rotor angles used to update the first angle signal DegOut of the rotor angle controller. The register signal rp_Ampln is the waveform amplitude of the drive motor, and the larger the amplitude, the faster the motor speed.

The angle controller controls the forward and reverse rotation of the motor and is a key circuit component of the present disclosure for compensating for the HALL deviation.

The drive waveform generator generates a drive waveform (for example, square wave and sine wave) according to the first angle signal DegOut provided by the angle controller and the amplitude signal rp_Ampln provided by the CPU.

The PWM waveform generator generates a PWM signal for driving a rotation of the motor according to a drive waveform signal provided by the drive waveform generator.

The motor receives the PWM signal and starts to rotate.

The HALL signal detector receives HALL sensor signals A, B, and C generated by rotations of the motor, and the HALL signals PHU, PHV, and PHW after a synchronous filtering process are transmitted to the angle controller for selecting the rotor angle to be calibrated.

The following exemplarily describes the angle controller in detail. The angle controller contains an angle counter, an angle self-increasing trigger signal TRIG from the PWM waveform generator, and an angle increment signal rp_DegCntlnc from the CPU control the count value of the angle counter to be approximately the same as the angle of the motor rotor. When the HALL signals {PHU, PHV, PHW} change, the current actual rotor angle is updated and sent to the angle counter to make the angle counter more accurate. In this case, the angle counter is synchronized with the angle of the motor rotor. Therefore, six count values of the angle counter can directly serve as commutation points, which are 9'd30, 9'd90, 9'd150, 9'd210, 9'd270, and 9'd330.

FIG. 4 shows a main circuit structure of the angle controller. The angle controller mainly consists of a selector, a comparator, an adder, and a trigger. The angle controller receives the register signals rp_DegCntEn, rp_UDeg1~6, and rp_DegCntlnc provided by the CPU, the three-phase HALL signals PHU, PHV, and PHW provided by the HALL signal detector, and the angle self-increasing trigger signal TRIG provided by the PWM waveform generator, and finally outputs the first angle signal DegOut.

The write-in value of the register signal rp_DegCntlnc is in a form of complement code.

When the highest digit of the angle increment signal rp_DegCntlnc is 0, the angle counter performs an addition operation, the value of the first angle signal DegOut increases from 0° by an angle increment whose value is the same as that of the register signal rp_DegCntlnc, and the motor rotates in a forward direction.

When the highest digit of the angle increment signal rp_DegCntlnc is 1, the angle counter performs a subtraction operation, the value of the first angle signal DegOut decreases from 360° by an angle decrement whose value is the same as an absolute value of the register signal rp_DegCntlnc, and the motor rotates in a reverse direction.

After the motor starts to rotate, the HALL signals PHU, PHV, and PHW change every 60 degrees, and whenever the HALL signals change, a compensation angle DegCnt_hUVWChg corresponding to the HALL values {PHU, PHV, PHW} is updated to the first angle signal DegOut, so that the first angle signal DegOut is consistent with the angle of the rotor.

When the motor performs forward rotation and the value of the first angle signal DegOut is greater than or equal to 360°, which manifests that the motor has rotated a cycle, the first angle signal DegOut is cleared and re-starts from 0°. When the motor performs reverse rotation and the value of the first angle signal DegOut is less than or equal to 0°, which manifests that the motor has rotated for a cycle, the first angle signal DegOut is set to be 9'd360 and re-decrease incrementally from 360°.

A method for realizing the operation of the angle controller by utilizing the above-mentioned circuit structure includes the following:
step (1) configuring register signal rp_DegCntlnc according to a motor speed, setting an angle increment; configuring register signals rp_UDeg1~rp_UDeg6 according to actual installation positions of HALL sensors, setting a compensation angle; configuring register signal rp_DegCntEn=1, where a motor starts to rotate; and continuing with step (2);
step (2) determining whether a second angle signal w_DegOut is greater than or equal to 360 ° or not, if yes, which means that the motor has rotated a cycle, clearing the second angle signal w_DegOut, re-rotating the motor and re-starting the second angle signal w_DegOut from 0°, if no, continuing with step (3);
step (3) determining whether three-phase HALL signals PHU, PHV, and PHW have changed, if yes, updating a compensation angle DegCnt_hUVWChg corresponding to the HALL signals to the second angle signal w_DegOut; if no, continuing with step (4);
step (4) determining whether an angle self-increasing trigger signal TRIG is valid, where a high level indicates the angle self-increasing trigger signal TRIG is valid, if yes, the second angle signal w_DegOut = w_DegOut + rp_DegCntlnc; if no, continuing with step (5);
step (5) keeping the second angle signal w_DegOut unchanged, and continuing with step (2).

The present disclosure includes the above circuit structure only as an example for illustration. Other hardware circuit structures capable of compensating for the HALL deviation by HALL signal are also included in the present disclosure.

For the present disclosure, simply writing the corresponding actual rotor angle to the registers rp_UDeg1~rp_UDeg6 can effectively compensate for advance commutation and lagged commutation caused by HALL deviation, therefore, the operation is simple and flexible.

As the embodiment 1 of the present disclosure and FIG. 2(a) have shown, the rotor angles corresponding to the HALL signal edges are consistent with the ideal commutation angles, and the write-in values for the register signals rp_UDeg 1-6 in step (1) are: rp_UDeg5->9'd30, rp_UDeg4-> 9'd90, rp_UDeg6->9'd150, rp_UDeg2->9'd210, rp_UDeg3->9'd270, rp_UDeg1->9'd330. In step (3), when the HALL signals change, 9'd30, 9'd90, 9'd150, 9'd210, 9'd270, and 9'd330 are updated to the first angle signal DegOut, and then the motor is immediately commutated.

As the embodiment 2 of the present disclosure and FIG. 2(b) have shown, the rotor angles corresponding to the HALL signal edges are prior to the ideal commutation angles, and the write-in values for the register signals rp_UDeg 1-6 in step (1) are: rp_UDeg5->9'd28, rp_UDeg4->9'd87, rp_UDeg6->9'd149, rp_UDeg2->9'd208, rp_UDeg3->9'd268, rp_UDeg1->9'd327. In step (3), when the HALL signals change, 9'd28, 9'd87, 9'd149, 9'd208, 9'd268, and 9'd327 are updated to the first angle signal DegOut for calibration, and then the first angle signal DegOut increments to the predetermined commutation angle for performing commutation.

As the embodiment 3 of the present disclosure and FIG. 2(c) have shown, the rotor angles corresponding to the HALL signal edges are posterior to the ideal commutation angles, and the write-in values for the register signals rp_UDeg 1-6 in step (1) are: rp_UDeg5->9'd33, rp_UDeg4->9'd94, rp_UDeg6->9'd153, rp_UDeg2->9'd215, rp_UDeg3->9'd272, rp_UDeg1->9'd331. In step (3), when the HALL signals change, the motor has commutated at the predetermined angle, therefore, 9'd33, 9'd94, 9'd153, 9'd215, 9'd272, and 9'd331 are updated to the first angle signal DegOut for calibration, so that the timing of the next commutation is more accurate.

The circuit structure for compensation of HALL deviation of a brushless DC motor and method for operation of an angle controller in the present disclosure are easy and simple for operation, and therefore, no complex software programs are needed, and the time for developing software programs and CPU resources are saved.

In addition, the codes for compensating the advance commutation and the lagged commutation in the present disclosure are the same, thus saving chip area.

In this specification, the present disclosure has been described with reference to its specific embodiments. However, it is obvious that various modifications and changes can still be made without departing from the spirit and scope of the present disclosure. Therefore, the specification and drawings should be considered illustrative and not restrictive.

## Claims

1. A circuit structure for compensation of HALL deviation of a brushless DC motor comprises:
a CPU, used to write in register values and output angle increment signal rp_DegCntlnc, angle controller enable signal rp_DegCntEn, and rotor angles rp_UDeg1, rp_UDeg2, rp_UDeg3, rp_UDeg4, rp_UDeg5, and rp_UDeg6;
an angle controller, connected with the CPU, a HALL signal detector, and a PWM waveform generator, wherein the angle controller controls forward and reverse rotations of a motor and compensates for a HALL deviation;
a drive waveform generator, connected with the CPU and the angle controller, wherein the drive waveform generator generates a drive waveform according to a first angle signal DegOut provided by the angle controller and an amplitude signal rp_Ampln provided by the CPU ;
the PWM waveform generator, connected with the angle controller and the drive waveform generator, wherein the PWM waveform generator generates a PWM signal for driving a rotation of the motor according to a drive waveform signal provided by the drive waveform generator;
the motor, connected with the PWM waveform generator, wherein the motor receives the PWM signal provided by the PWM waveform generator and starts to rotate; and
the HALL signal detector, connected to the motor and the angle controller, wherein the HALL signal detector receives HALL sensor signals generated by rotations of the motor, and the HALL signals PHU, PHV, and PHW after a synchronous filtering process are transmitted to the angle controller for selecting the rotor angle to be calibrated.

2. The circuit structure for compensation of HALL deviation of a brushless DC motor according to claim 1, wherein the angle controller comprises a counter, a selector, a comparator, an adder, and a trigger.

3. The circuit structure for compensation of HALL deviation of a brushless DC motor according to claim 2, wherein
an angle self-increasing trigger signal TRIG provided by the PWM waveform generator, the angle increment signal rp_DegCntlnc provided by the CPU, and an angle counter controlled by the HALL signals are synchronized with an angle of a motor rotor.

4. The circuit structure for compensation of HALL deviation of a brushless DC motor according to claim 2, wherein
six count values of the angle counter serve as commutation points, and the six count values are 9'd30, 9'd90, 9'd150, 9'd210, 9'd270, and 9'd330, respectively.

5. The circuit structure for compensation of HALL deviation of a brushless DC motor according to claim 2, wherein the angle controller enable signal rp_DegCntEn from the CPU is written in the angle controller; a highest digit of the angle increment signal rp_DegCntlnc controls forward rotation and reverse rotation of the motor; and when the HALL signals change, a corresponding compensation angle DegCnt_hUVWChg is updated to the first angle signal DegOut.

6. The circuit structure for compensation of HALL deviation of a brushless DC motor according to claim 5, wherein when the highest digit of the angle increment signal rp_DegCntlnc is 0, the angle counter performs an addition operation, the value of the first angle signal DegOut increases from 0° by an angle increment whose value is the same as that of the register signal rp_DegCntlnc, and the motor rotates in a forward direction; when the highest digit of the angle increment signal rp_DegCntlnc is 1, the angle counter performs a subtraction operation, the value of the first angle signal DegOut decreases from 360° by an angle decrement whose value is the same as an absolute value of the register signal rp_DegCntlnc, and the motor rotates in a reverse direction.

7. The circuit structure for compensation of HALL deviation of a brushless DC motor according to claim 1, wherein the HALL signals PHU, PHV, and PHW change every 60°.

8. The circuit structure for compensation of HALL deviation of a brushless DC motor according to claim 1, wherein when the motor rotates in a forward direction, if the value of the first angle signal DegOut is greater than or equal to 360°, clearing the first angle signal DegOut and re-increasing the first angle signal DegOut from 0°; when the motor rotates in a reverse direction, if the value of the first angle signal DegOut is less than or equal to 0°, setting the value of the first angle signalDegOut as 9'd360 and re-decreasing the first angle signal DegOut from 360°.

9. The circuit structure for compensation of HALL deviation of a brushless DC motor according to claim 1, wherein a write-in value of the register signal rp_DegCntlnc is in a form of complement code.

10. A method for operation of an angle controller based on the circuit structure according to claim 1, comprises the following:
step (1) configuring a register signal rp_DegCntlnc according to a motor speed, setting an angle increment; configuring register signals rp_UDeg1~rp_UDeg6 according to actual installation positions of HALL sensors, setting a compensation angle; configuring register signal rp_DegCntEn=1, where a motor starts to rotate;
step (2) determining whether a second angle signal w_DegOut is greater than or equal to 360° or not, if yes, which means that the motor has rotated a cycle, clearing the second angle signal w_DegOut, re-rotating the motor and re-starting the second angle signal w_DegOut from 0°, if no, continuing with step (3);
step (3) determining whether three-phase HALL signals PHU, PHV, and PHW have changed, if yes, updating a compensation angle DegCnt_hUVWChg corresponding to the HALL signals to the second angle signal w_DegOut; if no, continuing with step (4);
step (4) determining whether an angle self-increasing trigger signal TRIG is valid, if yes, increasing the second angle signal w_DegOut by rp_DegCntlnc, if no, continuing with step (5); and
step (5) keeping the second angle signal w_DegOut unchanged, and continuing with step (2).

11. The method for operation of an angle controller according to claim 10, wherein when a rotor angle corresponding to a HALL signal edge is consistent with an ideal commutation angle, the first angle signal DegOut is updated, and the motor commutates immediately.

12. The method for operation of an angle controller according to claim 10, wherein when a rotor angle corresponding to a HALL signal edge is prior to an ideal commutation angle, the first angle signal DegOut is calibrated and then increases to a predetermined commutation point to perform a commutation.

13. The method for operation of an angle controller according to claim 10, wherein when a rotor angle corresponding to a HALL signal edge is posterior to an ideal commutation angle, which indicates that the motor has commutated, the first angle signal DegOut is calibrated for a timing of next commutation.
